# DEMANDE DE BREVET EUROPEEN

(11) **EP 1 282 090 A1**
(43) Date de publication de la demande: **05.02.2003**
(21) Numéro de dépôt: 02356154.1
(22) Date de dépôt: 01.08.2002
(51) Int. Cl.: G07F 19/00, G06F 17/60

(54) **Procédé et dispositif de sécurisation des transactions**

(30) Priorité: 02.08.2001 FR 0110516
(71) Demandeur: Ascom Monetel, 07500 Guilherand-Granges (FR); G & A, 26100 Romans sur Isère (FR)
(72) Inventeur: Tahmazian, Daniel, 26000 Valence (FR); De Lacretelle, Didier, 07130 Saint Peray (FR); Baudoin, Michel, 74800 La Roche sur Foron (FR); Gervais, Jean-Pierre, 26100 Romans sur Isere (FR)
(74) Mandataire: Poncet, Jean-François

(57) **Abrégé**

Selon l'invention, une transaction est établie en utilisant un terminal client (1), un terminal prestataire (3), un serveur central (2) et un centre gestionnaire (4) connectés par le réseau téléphonique (5). La transaction est sécurisée par le fait que le client communique au prestataire son numéro de téléphone, lequel prestataire communique au serveur central (2) ce numéro de téléphone et les données de la transaction envisagée, le serveur central (2) gérant la suite des échanges d'informations en demandant confirmation au client, et en s'adressant ensuite au centre gestionnaire (4) pour obtenir un mini message de validation (29) qui est ensuite transmis sur le terminal prestataire (3). On assure ainsi la sécurité des clients qui ne transmettent pas leur numéro de carte bancaire, des prestataires qui sont assurés d'une transaction valide, et des centres gestionnaires tels que les banques qui sont assurées d'un accord du client.

## Description

La présente invention concerne les moyens permettant de sécuriser les transactions, et en particulier les transactions commerciales dans lesquelles le paiement d'une prestation est effectué par télétransmission d'informations.

L'un des problèmes des transactions commerciales par carte bancaire ou autre moyen équivalent réside dans la possibilité qu'ont les fraudeurs de réaliser des transactions illicites, non désirées par le titulaire de la carte, dès lors qu'ils connaissent le numéro complet de la carte et sa date de fin de validité.

En effet, de nombreuses transactions sont actuellement autorisées par la simple connaissance d'un numéro de carte, et la transaction peut alors se faire à l'insu du titulaire de la carte.

On comprend que la difficulté vient du fait que le client titulaire de la carte doit communiquer son numéro de carte au prestataire, pour que le paiement puisse avoir lieu et que le produit ou le service lui soit délivré.

Il y a un besoin de protéger le prestataire contre toute révocabilité de la transaction après délivrance de la prestation.

Il y a également un besoin de protéger le client ou titulaire de la carte contre toute utilisation frauduleuse de son numéro de carte bancaire.

Il y a un besoin de protéger la banque contre toute fausse transaction avec fausse carte bancaire dont le numéro ne fait pas l'objet d'un refus.

Il y a également un besoin de protéger les informations transmises sur la vie privée, informations susceptibles d'être contenues dans la carte à mémoire du client.

Un problème proposé par l'invention est de concevoir de nouveaux moyens permettant de sécuriser les transactions en assurant l'ensemble des protections définies ci-dessus.

On a pu déjà envisager des moyens permettant d'assurer la sécurité des transactions, mais ces moyens sont toujours liés à des supports technologiques spécifiques. La spécificité des supports technologiques est un frein important au développement de ces systèmes, qui nécessitent des investissements considérables dont l'utilisation n'est pas suffisante pour présenter un intérêt économique.

Ainsi, un autre problème proposé par l'invention est de concevoir des moyens de sécurisation de transaction qui soient indépendants des moyens matériels et de leurs évolutions technologiques pour que le client transmette une commande à un prestataire.

Pour atteindre ces objets ainsi que d'autres, l'invention prévoit un dispositif de sécurisation des transactions entre un prestataire et un client, comprenant au moins :
a) un terminal client comportant :
   - des moyens pour communiquer par une ligne téléphonique,
   - une unité de calcul locale et des mémoires associées contenant un programme client adapté,
   - des moyens d'interface d'entrée, accessibles par l'unité de calcul locale, et permettant au client d'entrer des codes et des messages à transmettre,
   - des moyens d'interface de sortie, accessibles par l'unité de calcul locale et permettant au client de percevoir les messages reçus,
b) un serveur central comportant :
   - une unité de calcul centrale et des mémoires associées contenant un programme central adapté,
   - des moyens pour communiquer par au moins une ligne téléphonique,
c) un terminal prestataire, comportant :
   - une unité de calcul prestataire, et des mémoires associées contenant un programme prestataire adapté,
   - des moyens pour communiquer par une ligne téléphonique,
   - des moyens d'interface d'entrée, accessibles par l'unité de calcul prestataire, et permettant au prestataire d'entrer des codes et des messages à transmettre,
   - des moyens d'interface de sortie, accessibles par l'unité de calcul prestataire, et permettant au prestataire de percevoir les messages reçus,
d) un centre gestionnaire, comportant :
   - une unité de calcul gestionnaire, et des mémoires associées contenant un programme gestionnaire approprié,
   - des moyens pour communiquer par une ligne téléphonique,
      les programmes du terminal client, du serveur central, du terminal prestataire et du centre gestionnaire comprenant des séquences d'instructions pour commander le déroulement d'au moins une transaction selon la succession des étapes :
      i) lorsque le terminal prestataire reçoit du prestataire le numéro de téléphone du client et les informations relatives à la transaction envisagée, il envoie ces données au serveur central par la ligne téléphonique,
      ii) le serveur central mémorise lesdites données reçues du terminal prestataire et dépose un message d'appel pour transaction au terminal client par la ligne téléphonique en utilisant le numéro de téléphone contenu dans lesdites données reçues du terminal prestataire,
      iii) le terminal client reçoit le message d'appel pour transaction du serveur central et génère un signal de requête destiné au client,
      iv) lorsque le terminal client reçoit du client un ordre d'accord, il génère et transmet un message d'accord au serveur central par la ligne téléphonique,
      v) le serveur central reçoit le message d'accord et le transmet au centre gestionnaire avec les données relatives à la transaction,
      vi) le centre gestionnaire contrôle le message d'accord et les données reçues, et envoie un mini message de validation au serveur central, qui transmet ce mini message au terminal prestataire,
      vii) le terminal prestataire génère un signal de résultat perceptible par le prestataire.

On comprend que le dispositif est basé sur le fait que le prestataire ne connaît à aucun moment le numéro de carte bancaire ou autre moyen de paiement utilisé par le client, et qu'il ne connaît qu'un numéro de téléphone. Le numéro de téléphone étant unique, et le téléphone étant accessible quasiment en permanence, le contrôle de transaction peut être réalisé rapidement, par des communications confidentielles, éventuellement cryptées, entre le client, le serveur central et le centre de gestion tel qu'un centre de télépaiement. Le prestataire reçoit un message de validation provenant directement du centre de gestion, indépendamment du client, ce qui lui offre une garantie de transaction irrévocable. De son côté, le centre de gestion a pu obtenir du client des informations suffisantes pour l'authentifier de façon certaine, et se trouve ainsi garanti contre toutes contestations sur l'accord qu'il a reçu de sa part.

Selon un mode de réalisation avantageux, le dispositif est tel que :
- pour générer et envoyer le message d'appel pour transaction, le serveur central contient dans ses mémoires associées une séquence d'instructions d'appel pour transaction qui établit une connexion téléphonique avec le terminal client, génère et envoie le message d'appel pour transaction, puis interrompt la connexion téléphonique,
- pour transmettre le message d'accord, le terminal client contient dans ses mémoires associées une séquence d'instructions qui établit une communication téléphonique avec le serveur central, transmet le message d'accord, puis attend la réception d'autres messages transmis par le serveur central.

Dans ce mode de réalisation, on utilise le caractère unique du numéro de téléphone, et éventuellement la connaissance du numéro appelant, pour réaliser une sécurité des transmissions d'informations, et une quasi authentification du client par le serveur central, et du serveur central par le client.

De préférence, dans ce cas, le dispositif est tel que :
- la séquence d'instructions d'appel pour transaction contient des instructions réalisant, avant transmission du message d'appel pour transaction, une étape de téléauthentification du terminal client,
- la séquence d'instructions d'accord contient des instructions réalisant, avant transmission du message d'accord, une étape de téléauthentification du serveur central.

On peut ainsi améliorer la sécurité des transmissions d'informations.

On peut avantageusement prévoir des messages d'accusé de réception, par exemple envoyés par le client vers le terminal prestataire par l'intermédiaire du serveur central, et éventuellement un message de validation transmis depuis le centre de gestion vers le terminal client lors de la validation de la transaction.

De préférence :
- les données relatives à la transaction envisagée et émises par le terminal prestataire contiennent une durée de validité,
- le programme du serveur central comprend une séquence de contrôle de message d'accord à l'issue de laquelle le message d'accord n'est transmis au centre gestionnaire que si la durée de validité n'est pas dépassée.

De la sorte, la transaction est annulée si le client ne confirme pas son accord dans le délai fixé par le prestataire.

Selon un mode de réalisation préféré, le dispositif est tel que :
- le terminal client comprend un lecteur de carte à mémoire,
- la séquence d'instructions d'accord contient des instructions pour gérer l'introduction et la lecture d'au moins une carte à mémoire du client dans le lecteur de carte à mémoire, et pour générer le message d'accord contenant les données prélevées sur la carte à mémoire,
- les mémoires associées du serveur central contiennent une séquence d'instructions d'accord, selon lesquelles le serveur central reçoit du terminal client le message d'accord, détermine le centre gestionnaire correspondant en fonction des données de la carte à mémoire et de la transaction à réaliser, génère un mini message et l'envoie au centre gestionnaire par la ligne téléphonique,
- les mémoires associées du centre gestionnaire contiennent une séquence d'instructions de contrôle, gérant la réception et le contrôle du mini message et générant un mini message de validation transmis au serveur central par la ligne téléphonique, lequel serveur central transmet ledit mini message de validation au terminal prestataire qui peut alors le rendre accessible au prestataire.

Selon une possibilité, la séquence d'instructions de contrôle réalise une cession d'échange de données et d'instructions avec le terminal client par l'intermédiaire du serveur central, ladite cession comprenant l'écriture d'informations dans la carte à mémoire du client.

Le dispositif selon l'invention peut également avoir des fonctionnalités autres que celles de gérer une transaction commerciale. Par exemple, le dispositif peut gérer la mise à jour de cartes à mémoire, par exemple de la carte de mémorisation de données médicales connue sous l'appellation carte Vitale. Pour cela, on prévoit la mise en communication directe du terminal client avec un centre de gestion spécifique par l'intermédiaire du serveur central. Dans ce cas, le dispositif est tel que :
- les mémoires associées du terminal client contiennent des séquences d'instructions réalisant une cession de mise à jour de carte à mémoire selon laquelle le terminal client lit les données d'une carte à mémoire introduite par le client dans le lecteur de carte à mémoire et génère un message d'appel transmis au serveur central par la ligne téléphonique,
- les mémoires associées du serveur central contiennent des séquences d'instructions de mise à jour, selon lesquelles le serveur central reçoit le message d'appel, détermine en fonction des données du message d'appel un centre gestionnaire approprié, envoie un message audit centre gestionnaire approprié et établit un dialogue direct entre le centre gestionnaire approprié et le terminal client pour la mise à jour de la carte du client.

De façon globale, l'invention prévoit un procédé de sécurisation des transactions entre un prestataire et un client, mettant en oeuvre un dispositif défini ci-dessus avec terminal prestataire, terminal client, serveur central et centre gestionnaire, dans lequel :
- le prestataire communique au serveur central le numéro de téléphone du client et les données relatives à la prestation envisagée,
- le serveur central communique au client par la ligne téléphonique lesdites données relatives à la prestation envisagée, et interrompt la communication téléphonique,
- le client prend connaissance de ces données et communique par la ligne téléphonique au serveur central son accord ou son refus, ainsi que les données relatives à ses moyens de paiement,
- le serveur central s'adresse à un centre gestionnaire tel qu'un centre de télépaiement pour obtenir de sa part un mini message de validation de transaction, mini message qu'il communique ensuite au prestataire.

D'autres objets, caractéristiques et avantages de la présente invention ressortiront de la description suivante de modes de réalisation particuliers, faite en relation avec les figures jointes, parmi lesquelles:
- la figure 1 illustre l'architecture générale d'un dispositif de sécurisation des transactions selon l'invention, ainsi que les flux d'informations et de données ; et
- la figure 2 illustre l'architecture d'un terminal tel que le terminal client, le terminal prestataire ou éventuellement un terminal de centre gestionnaire.

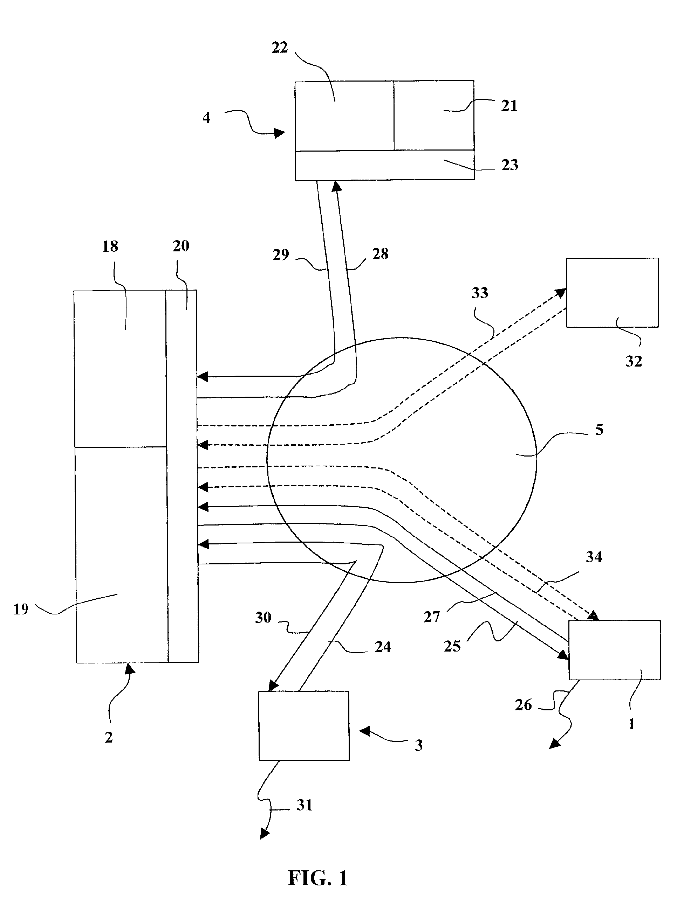

Dans le mode de réalisation illustré sur la figure 1, un dispositif de sécurisation des transactions selon l'invention comprend un terminal client 1, un serveur central 2, un terminal prestataire 3, au moins un centre gestionnaire 4, et un réseau téléphonique 5 de communications téléphoniques.

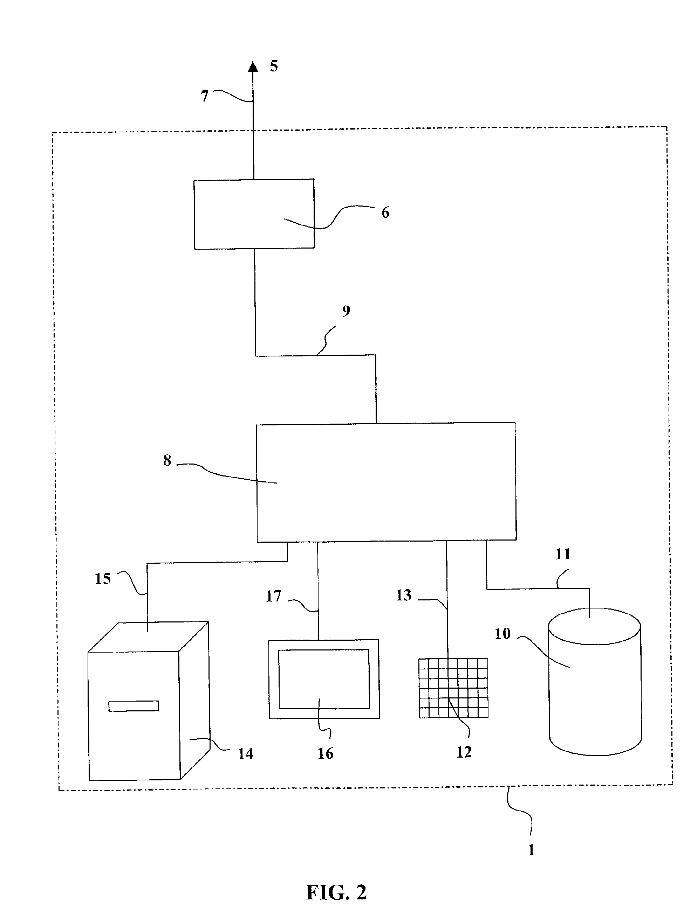

En se référant à la figure 2, un terminal client 1 comprend des moyens pour communiquer par une ligne téléphonique, par exemple un modem 6 connecté à une ligne téléphonique 7 du réseau téléphonique 5.

Le terminal client 1 comprend une unité de calcul locale 8, connectée au modem 6 par une ligne 9, et connectée à des mémoires associées 10 par une ligne 11. Les mémoires associées 10 contiennent un programme client adapté, mis en oeuvre par l'unité de calcul locale 8 pour remplir les fonctions du terminal client 1.

Le terminal client 1 comprend des moyens d'interface d'entrée, accessibles par l'unité de calcul locale 8, et permettant au client d'entrer des codes et des messages à transmettre sur la ligne téléphonique 7. Dans la réalisation illustrée sur la figure 2, les moyens d'interface d'entrée comprennent un clavier 12 connecté à l'unité de calcul locale 8 par une ligne 13, et un lecteur de carte à mémoire 14 connecté à l'unité de calcul locale 8 par une ligne 15.

En outre, le terminal client 1 comprend des moyens d'interface de sortie, accessibles par l'unité de calcul locale 8, et permettant au client de percevoir les messages reçus. Dans la réalisation illustrée sur la figure 2, les moyens d'interface de sortie comprennent un écran d'affichage 16 connecté à l'unité de calcul locale 8 par une ligne 17. On peut également envisager des moyens d'interface de sortie comprenant un générateur de signal audible, un générateur de signal lumineux, ou tout autre générateur de signal perceptible par le client.

En se référant à nouveau à la figure 1, on a illustré que le serveur central 2 comporte une unité de calcul centrale 18 et des mémoires associées 19 contenant un programme central adapté, et comprend des moyens tels qu'un modem 20 pour communiquer par au moins une ligne téléphonique du réseau téléphonique 5.

Le terminal prestataire 3 peut avoir une structure similaire de celle illustrée sur la figure 2 pour le terminal client 1, avec une unité de calcul prestataire, des mémoires associées contenant un programme prestataire adapté, des moyens de modem pour communiquer avec la ligne téléphonique, des moyens d'interface d'entrée tels qu'un clavier et éventuellement un lecteur de carte à mémoire, accessibles par l'unité de calcul prestataire et permettant au prestataire d'entrer des codes et des messages à transmettre, et des moyens d'interface de sortie accessibles par l'unité de calcul prestataire et permettant au prestataire de percevoir les messages reçus par la ligne téléphonique.

Comme illustré schématiquement sur la figure 1, le centre gestionnaire 4 comporte au moins une unité de calcul gestionnaire 21, des mémoires associées 22 contenant un programme gestionnaire approprié, et des moyens 23 pour communiquer par une ligne téléphonique du réseau téléphonique 5.

Les programmes contenus dans les mémoires associées respectives du terminal client 1, du terminal prestataire 3, du serveur central 2 et du centre gestionnaire 4, comprennent des séquences d'instructions pour commander le déroulement d'au moins une transaction selon une succession d'étapes assurant la sécurité de la transaction. Dans le mode de réalisation illustré sur la figure 1, la succession des étapes comprend :
i) lorsque le terminal prestataire 3 reçoit du prestataire le numéro de téléphone qui lui a été communiqué par le client, et les informations relatives à la transaction envisagée, il envoie ces données au serveur central 2 par la ligne téléphonique du réseau téléphonique 5 ; cette première transmission d'informations et de données est illustrée sur la figure 1 par la flèche 24 ;
ii) le serveur central 2 mémorise lesdites données 24 reçues du terminal prestataire 3 dans ses mémoires associées 19, et envoie un message d'appel de transaction au terminal client 1 par la ligne téléphonique en utilisant le numéro de téléphone contenu dans lesdites données reçues du terminal prestataire 3 ; cette seconde transmission d'informations et de données est illustrée sur la figure 1 par la flèche 25 ;
iii) le terminal client 1 reçoit le message d'appel de transaction 25 du serveur central 2 et génère un signal de requête 26 destiné aux clients, par exemple un signal sur l'écran d'affichage 16 ;
iv) lorsque le terminal client 1 reçoit du client un ordre d'accord, par exemple entré par le clavier 12, il génère et transmet un message d'accord comme illustré par la flèche 27 au serveur central 2 par la ligne téléphonique du réseau téléphonique 5 ;
v) le serveur central 2 reçoit le message d'accord 27, et le transmet au centre gestionnaire 4 avec les données relatives à la transaction envisagée ; cette transmission est illustrée par la flèche 28 ;
vi) le centre gestionnaire 4 contrôle le message d'accord 27 et les données reçues, et envoie un mini message de validation 29 au serveur central 2 qui assure une transmission de ce mini message au terminal prestataire 3 sous forme d'un message 30. De préférence, le même mini message de validation est également transmis au terminal client 1 ;
vii) le terminal prestataire 3 génère alors un signal de résultat 31 perceptible par le prestataire.

De préférence, le message d'appel de transaction 25 est transmis au terminal client 1 lors d'une première connexion téléphonique, et le message d'accord 27 est transmis au serveur central 2 lors d'une seconde connexion téléphonique distincte de la première connexion téléphonique. De la sorte, le message d'appel de transaction 25 a peu de chances d'être piraté, et parvient nécessairement au terminal client 1 ; de même, le message d'accord 27 peut être contrôlé par le serveur central 2 comme provenant du terminal client 1, car ayant le numéro d'appel du client. Il y a peu de chances qu'un message d'accord 27 puisse être transmis par un fraudeur au serveur central 2 sans que ce dernier détecte la fraude.

Pour améliorer encore la sécurité de la transaction, on peut prévoir que la séquence d'instructions d'appel de transaction contient des instructions réalisant, avant transmission du message d'appel de transaction 25, une étape de téléauthentification du terminal client 1 par le serveur central 2. La téléauthentification peut être réalisée par tous moyens connus, à la disposition de l'homme du métier.

De même, on peut avantageusement prévoir que la séquence d'instructions d'accord contient des instructions réalisant, avant transmission du message d'accord 27, une étape de téléauthentification du serveur central 2, évitant ainsi que des informations confidentielles données par le client soient transmises à une structure autre que le serveur central 2 en dehors de sa volonté.

L'étape de transmission du message d'appel de transaction 25 peut être associée à une étape d'accusé réception. Pour cela, la séquence d'instructions d'appel de transaction du serveur central 2, et les mémoires associées du terminal client 1, peuvent contenir des instructions d'accusé réception, selon lesquelles, après envoi du message d'appel de transaction 25 et avant d'interrompre la première connexion téléphonique, le serveur central 2 attend un message d'accusé réception, le terminal client 1 génère ledit message d'accusé réception, le serveur central 2 mémorise ledit message d'accusé réception et le transmet au terminal prestataire 3 par la ligne téléphonique du réseau téléphonique 5.

Les informations contenues dans le message d'accord 27 envoyé par le terminal client 1 vers le serveur central 2 peuvent avantageusement contenir des données prélevées d'une carte à mémoire du client. On utilise alors le lecteur de carte à mémoire 14.

Dans ce cas, la séquence d'instructions d'accord contient des instructions pour gérer l'introduction et la lecture d'au moins une carte à mémoire du client dans le lecteur de carte à mémoire 14, et la génération du message d'accord 27 contenant les données nécessaires au contrôle de la transaction, données qui ont été prélevées sur la carte à mémoire.

Ensuite, les mémoires associées 19 du serveur central 2 contiennent une séquence d'instructions d'accord, selon lesquelles le serveur central 2 reçoit du terminal client 1 le message d'accord 27, détermine le centre gestionnaire correspondant 4 en fonction des données de la carte à mémoire et de la transaction à réaliser, génère un mini message 28 et l'envoie au centre gestionnaire 4 par la ligne téléphonique du réseau téléphonique 5.

Les mémoires associées 22 du centre gestionnaire 4 contiennent une séquence d'instructions de contrôle, gérant la réception et le contrôle du mini message 28 et générant un mini message de validation 29 transmis au serveur central 2 par la ligne téléphonique du réseau téléphonique 5. Le serveur central 2 transmet alors ledit mini message de validation 29 au terminal prestataire 3, sous forme du message 30, lequel terminal prestataire 3 peut alors le rendre accessible au prestataire sous forme d'un signal de résultat comme illustré par la flèche 31.

De préférence, la séquence d'instructions de contrôle réalise une cession d'échange de données et d'instructions entre le centre gestionnaire 4 et le terminal client 1 par l'intermédiaire du serveur central 2, ladite cession comprenant éventuellement l'écriture d'informations dans la carte à mémoire du client. On peut ainsi mettre à jour la carte à mémoire, selon les procédures généralement mises en oeuvre par les centres de télépaiement.

La description ci-dessus réalise une transaction commerciale avec sécurisation du paiement.

On décrira ci-après une autre fonctionnalité possible du dispositif selon l'invention, trouvant des applications par exemple dans la gestion des cartes de mémorisation de données médicales telles que la carte connue sous l'appellation carte Vitale, ou la mise à jour de toutes autres cartes à mémoire directement chez le client par un centre gestionnaire approprié.

Dans ce cas, les mémoires associées 10 du terminal client 1 contiennent des séquences d'instructions réalisant une cession de mise à jour de carte à mémoire, selon laquelle le terminal client 1 lit les données d'une carte à mémoire introduite par le client dans le lecteur de carte à mémoire 14, et génère un message d'appel 34 transmis au serveur central 2 par la ligne téléphonique du réseau téléphonique 5.

Les mémoires 19 du serveur central 2 contiennent des séquences d'instructions de mise à jour, selon lesquelles le serveur central 2 reçoit le message d'appel 34, détermine en fonction des données contenues dans le message d'appel 34 un centre gestionnaire approprié tel que le centre 32, envoie un message 33 audit centre gestionnaire approprié 32, et établit un dialogue direct entre le centre gestionnaire approprié 32 et le terminal client 1 pour la mise à jour de la carte du client.

Dans la mise en oeuvre du dispositif décrit précédemment, une transaction sécurisée peut être réalisée par les étapes suivantes :
- le prestataire communique au serveur central 2 le numéro de téléphone du client et les données relatives à la prestation envisagée,
- le serveur central 2 communique au client par la ligne téléphonique du réseau téléphonique 5 lesdites données relatives à la prestation envisagée, puis interrompt la communication téléphonique,
- le client prend connaissance de ces données sur son terminal client 1 et communique au serveur central 2 par la ligne téléphonique du réseau téléphonique 5 son accord ou son refus pour la transaction envisagée, ainsi que les données relatives à ses moyens de paiement,
- le serveur central 2 s'adresse à un centre gestionnaire 4 tel qu'un centre de télépaiement pour obtenir de sa part un ordre de validation de transaction, ordre qu'il communique ensuite au prestataire.

La présente invention n'est pas limitée aux modes de réalisation qui ont été explicitement décrits, mais elle en inclut les diverses variantes et généralisations contenues dans le domaine des revendications ci-après.

## Revendications

1. Dispositif de sécurisation des transactions entre un prestataire et un client, comprenant au moins :
a) un terminal client (1) comportant :
- des moyens (6, 9) pour communiquer par une ligne téléphonique (7),
- une unité de calcul locale (8) et des mémoires associées (10) contenant un programme client adapté,
- des moyens d'interface d'entrée (12, 14), accessibles par l'unité de calcul locale (8), et permettant au client d'entrer des codes et des messages à transmettre,
- des moyens d'interface de sortie (16), accessibles par l'unité de calcul locale (8) et permettant au client de percevoir les messages reçus,
b) un serveur central (2) comportant :
- une unité de calcul centrale (18) et des mémoires associées (19) contenant un programme central adapté,
- des moyens (20) pour communiquer par au moins une ligne téléphonique,
c) un terminal prestataire (3), comportant :
- une unité de calcul prestataire, et des mémoires associées contenant un programme prestataire adapté,
- des moyens pour communiquer par une ligne téléphonique,
- des moyens d'interface d'entrée, accessibles par l'unité de calcul prestataire, et permettant au prestataire d'entrer des codes et des messages à transmettre,
- des moyens d'interface de sortie, accessibles par l'unité de calcul prestataire, et permettant au prestataire de percevoir les messages reçus,
d) un centre gestionnaire (4), comportant :
- une unité de calcul gestionnaire (21), et des mémoires associées (22) contenant un programme gestionnaire approprié,
- des moyens (23) pour communiquer par une ligne téléphonique,
les programmes du terminal client (1), du serveur central (2), du terminal prestataire (3) et du centre gestionnaire (4) comprenant des séquences d'instructions pour commander le déroulement d'au moins une transaction selon la succession des étapes :
i) lorsque le terminal prestataire (3) reçoit du prestataire le numéro de téléphone du client et les informations relatives à la transaction envisagée, il envoie ces données (24) au serveur central (2) par la ligne téléphonique,
ii) le serveur central (2) mémorise lesdites données (24) reçues du terminal prestataire (3), puis génère et envoie un message d'appel pour transaction (25) au terminal client (1) par la ligne téléphonique en utilisant le numéro de téléphone contenu dans lesdites données (24) reçues du terminal prestataire (3),
iii) le terminal client (1) reçoit le message d'appel pour transaction (25) du serveur central (2) et génère un signal de requête (26) destiné au client,
iv) lorsque le terminal client (1) reçoit du client un ordre d'accord, il génère et transmet un message d'accord (27) au serveur central (2) par la ligne téléphonique,
v) le serveur central (2) reçoit le message d'accord (27) et le transmet au centre gestionnaire (4) avec les données relatives à la transaction,
vi) le centre gestionnaire (4) contrôle le message d'accord (27) et les données reçues, et envoie un mini message de validation (29) au serveur central (2), qui transmet ce mini message (30) au terminal prestataire (3),
vii) le terminal prestataire (3) génère un signal de résultat (31) perceptible par le prestataire.

2. Dispositif selon la revendication 1, **caractérisé en ce que** :
- pour générer et envoyer le message d'appel pour transaction (25), le serveur central (2) contient dans ses mémoires associées (19) une séquence d'instructions d'appel pour transaction qui établit une connexion téléphonique avec le terminal client (1), génère et envoie le message d'appel pour transaction (25), puis interrompt la connexion téléphonique,
- pour transmettre le message d'accord (27), le terminal client (1) contient dans ses mémoires associées (10) une séquence d'instructions qui établit une communication téléphonique avec le serveur central (2), transmet le message d'accord (27), puis attend la réception d'autres messages transmis par le serveur central (2).

3. Dispositif selon la revendication 2, **caractérisé en ce que** :
- la séquence d'instructions d'appel pour transaction contient des instructions réalisant, avant transmission du message d'appel pour transaction (25), une étape de téléauthentification du terminal client (1),
- la séquence d'instructions d'accord contient des instructions réalisant, avant transmission du message d'accord (27), une étape de téléauthentification du serveur central (2).

4. Dispositif selon l'une des revendications 2 ou 3, **caractérisé en ce que** la séquence d'instructions d'appel de transaction du serveur central (2) et les mémoires associées (10) du terminal client (1) contiennent des instructions d'accusé réception, selon lesquelles, après envoi du message d'appel de transaction (25) et avant d'interrompre la première connexion téléphonique, le serveur central (2) attend un message d'accusé réception, le terminal client (1) génère ledit message d'accusé réception, le serveur central (2) mémorise ledit message d'accusé réception et le transmet au terminal prestataire (3) par la ligne téléphonique du réseau téléphonique (5).

5. Dispositif selon l'une quelconque des revendications 1 à 4, **caractérisé en ce que** :
- les données (24) relatives à la transaction envisagée et émises par le terminal prestataire (3) contiennent une durée de validité,
- le programme du serveur central (2) comprend une séquence de contrôle de message d'accord (27) à l'issue de laquelle le message d'accord (27) n'est transmis au centre gestionnaire (4) que si la durée de validité n'est pas dépassée.

6. Dispositif selon l'une quelconque des revendications 1 à 5, **caractérisé en ce que** :
- le terminal client (1) comprend un lecteur de carte à mémoire (14),
- la séquence d'instructions d'accord contient des instructions pour gérer l'introduction et la lecture d'au moins une carte à mémoire du client dans le lecteur de carte à mémoire (14), et pour générer le message d'accord (27) contenant les données prélevées sur la carte à mémoire,
- les mémoires associées (19) du serveur central (2) contiennent une séquence d'instructions d'accord, selon lesquelles le serveur central (2) reçoit du terminal client (1) le message d'accord (27), détermine le centre gestionnaire (4) correspondant en fonction des données de la carte à mémoire et de la transaction à réaliser, génère un mini message (28) et l'envoie au centre gestionnaire (4) par la ligne téléphonique,
- les mémoires associées (22) du centre gestionnaire (4) contiennent une séquence d'instructions de contrôle, gérant la réception et le contrôle du mini message (28) et générant un mini message de validation (29) transmis au serveur central (2) par la ligne téléphonique, lequel serveur central (2) assure une transmission dudit mini message de validation sous forme d'un message (30) au terminal prestataire (3) qui peut alors le rendre accessible au prestataire.

7. Dispositif selon la revendication 6, **caractérisé en ce que** la séquence d'instructions de contrôle réalise une cession d'échange de données et d'instructions avec le terminal client (1) par l'intermédiaire du serveur central (2), ladite cession comprenant l'écriture d'informations dans la carte à mémoire du client.

8. Dispositif selon l'une des revendications 6 ou 7, **caractérisé en ce que** :
- les mémoires associées (10) du terminal client (1) contiennent des séquences d'instructions réalisant une cession de mise à jour de carte à mémoire selon laquelle le terminal client (1) lit les données d'une carte à mémoire introduite par le client dans le lecteur de carte à mémoire (14) et génère un message d'appel (34) transmis au serveur central (2) par la ligne téléphonique,
- les mémoires associées (19) du serveur central (2) contiennent des séquences d'instructions de mise à jour, selon lesquelles le serveur central reçoit le message d'appel (34), détermine en fonction des données du message d'appel (34) un centre gestionnaire approprié (32), envoie un message (33) audit centre gestionnaire approprié (32) et établit un dialogue direct entre le centre gestionnaire approprié (32) et le terminal client (1) pour la mise à jour de la carte du client.

9. Procédé de sécurisation des transactions entre un prestataire et un client, mettant en oeuvre un dispositif selon l'une quelconque des revendications 1 à 8 avec terminal prestataire (3), terminal client (1), serveur central (2) et centre gestionnaire (4), dans lequel :
- le prestataire communique au serveur central (2) le numéro de téléphone du client et les données relatives à la prestation envisagée,
- le serveur central (2) communique au client par la ligne téléphonique lesdites données relatives à la prestation envisagée, et interrompt la communication téléphonique,
- le client prend connaissance de ces données et communique par la ligne téléphonique au serveur central (2) son accord ou son refus, ainsi que les données relatives à ses moyens de paiement,
- le serveur central s'adresse à un centre gestionnaire (4) tel qu'un centre de télépaiement pour obtenir de sa part un mini message de validation de transaction (29), mini message qu'il communique ensuite au prestataire.
